# EUROPEAN PATENT APPLICATION

(11) **EP 2 551 248 A2**
(43) Date of publication of application: **30.01.2013**
(21) Application number: 12177805.4
(22) Date of filing: 25.07.2012
(51) Int. Cl.: C03B 37/012, C03B 37/014, G02B 6/00

(54) **Methods for manufacturing low water peak optical waveguide**

(30) Priority: 29.07.2011 US 201113194308
(71) Applicant: Dabby, Franklin W., Los Angeles, CA 90024 (US)
(72) Inventor: Dabby, Franklin W., Los Angeles, CA 90024 (US)
(74) Representative: Johnson, Yvonne Catherine

(57) **Abstract**

Methods are disclosed for manufacturing a cylindrical glass optical waveguide preform having low water content for use in the manufacture of optical waveguide fiber.

The glass optical waveguide preform has a water content sufficiently low such that an optical waveguide fiber producible from the glass optical waveguide preform exhibits an optical attenuation of less than about 0.35 dB/km, and preferably less than about 0.31 dB/km, at a measured wavelength of 1380 nm. Methods are also disclosed for manufacturing glass preforms used in the manufacture of such a glass optical waveguide preform that combine the vapor axial deposition (VAD) and outside vapor deposition (OVD) techniques.

## Description

### BACKGROUND OF THE INVENTION

The present invention relates generally to the field of optical waveguide fibers, and more particularly to optical waveguide preforms and methods of making optical waveguide preforms, from which low water peak optical waveguide fibers are manufactured.

A significant goal of the telecommunications industry is to transmit greater amounts of information over longer distances, in shorter periods of time. Over time there has also typically been an increase in the usage of telecommunication systems, by users and by system resources. This has resulted in demands for increased bandwidth in the media used to carry this information over long distances, in particular for optical waveguide fibers that are contained in telecommunication cables.

Bandwidth in optical waveguide fibers is dependent on a number of factors, such as the attenuation of the fiber at the transmission wavelength. Impurities present in the light guiding region of the fiber can increase the attenuation of the fiber, due to absorption of the transmitted light. Of particular significance is the attenuation caused by the hydroxyl radical (OH), which can be bonded to the fiber structure during the manufacturing process. The presence of OH bonds in the light guiding region of the fiber can cause an attenuation increase, with a peak of attenuation in a window around 1380 nm, also generally referred to as the water peak. The 1380 nm window is generally defined as the range of wavelengths between about 1330 nm to about 1470nm, with the peak attenuation effect typically around 1383 nm.

### SUMMARY OF THE INVENTION

The present invention relates to methods of manufacturing a large low water glass optical waveguide core preform at high production rates. The glass optical waveguide preform is used to manufacture low water-peak optical waveguide fiber. The manufacture of doped silica products is described. All the processes described herein are equally applicable to the manufacture of non-doped silica products in the case where silica-based reaction products contain no dopants.

One aspect relates to a method of fabricating a porous core body which comprises steps of chemically reacting at least some of the constituents of a moving fluid mixture with at least one glass forming precursor compound in an oxidizing medium to form a silica-based reaction product. At least a portion of the reaction product, which contains hydrogen bonded to oxygen, is collected or deposited to form a silica-based porous core body, which preferably comprises a dopant such as germanium dioxide. The porous core body thus formed is typically subjected to a heat treatment in a furnace, during which a gas mixture may be passed through the furnace, which dries and compacts the porous core body.

In another aspect, two coatings of silica-based soot are deposited on a bait rod, the first of which contains a dopant and the second of which does not contain a dopant, forming a porous core preform. The porous core preform is then chemically dried and sintered to form a glass core preform.

In another aspect, a method of manufacturing a glass core preform includes several steps. First, a silica-based core material is deposited on a target of deposition comprising a rotating bait rod to form a preferably substantially solid soot cylindrical initial core preform. The initial core preform is preferably held at one end by the bait rod and is free at an opposing end. Then, additional silica-based core material is deposited on the target via a reciprocating (e.g., back and forth along the longitudinal length of the target) deposition. Cladding material is then deposited on the target via a reciprocating deposition to form a final core preform. Then, at least a portion of the final core preform is dried and sintered to form a glass core preform.

Preferably, a handle is positioned against or close to the opposing end of the initial core preform after the initial axial deposition and before the reciprocating depositions. The handle and the rod at the opposite end of the preform is then treated as part of the target for the subsequent reciprocating depositions.

In another aspect, a method of manufacturing a glass core preform includes several steps. First, a silica-based core material is deposited on a target of deposition comprising a rotating bait rod to form a preferably substantially cylindrical solid soot initial core preform. The initial core preform is preferably held at one end by the bait rod and is free at an opposing end. Simultaneously with the formation of the cylindrical solid initial core preform additional silica-based core material is deposited on the target. If needed, additional silica-based core material is deposited on the target via a reciprocating deposition. Cladding material is then deposited on the target via a reciprocating deposition to form a final soot core preform. Then, at least a portion of the final soot core preform is dried and sintered to form a glass core preform.

In another aspect, a method of manufacturing a glass core preform includes several steps. A silica-based material is deposited on a target of deposition comprising a rotating bait rod to form a substantially cylindrical initial core preform. The initial core preform is held at one end by the bait rod and is free at an opposing end. Cladding material is then deposited on the target via a reciprocating deposition to form a final core preform. Then, at least a portion of the final core preform is dried and sintered to form a glass core preform. The drying and sintering steps are performed under conditions suitable to make an optical fiber having an attenuation of less than about 0.35 dB/km, and preferably less than about 0.31 dB/km, at a wavelength of 1380 nm.

In another aspect, the glass core preform is drawn into glass core rods, which function as a substrate for the further deposition of cladding silica soot by an OVD method to form a porous optical waveguide preform. The porous optical waveguide preform is chemically dried and sintered, to form a glass optical waveguide preform, so that the optical waveguide fiber producible from these preforms exhibits an optical attenuation of less than about 0.35 dB/km, and preferably less than about 0.31 dB/km, at a measured wavelength of about 1380 nm.

In another aspect, the glass core preform comprises a doped centerline region of such dimensions that it is suitable for forming a glass optical waveguide preform that can be drawn into optical waveguide fiber, where the fiber producible from these preforms exhibits an optical attenuation of less than about 0.35 dB/km, and preferably less than about 0.31 dB/km, at a measured wavelength of about 1380 nm.

The methods disclosed herein result in a number of advantages over other methods known in the art, including the following:
1. The traditional OVD method of core preform production requires the use of a removable substrate which forms a centerline hole; this hole remains in the glass core preform after drying and sintering. The water peak is largely a result of water being trapped in the glass during the fiber manufacturing process, and in the case of the OVD process a large portion of the water is trapped in the centerline hole region prior to the hole being closed. The most common cause of the water being trapped in the centerline hole is through rewetting of the glass by exposure to an atmosphere that contains a hydrogen containing compound, such as, but not limited to, water. The present method produces a core preform with no centerline hole in the core region, eliminating the rewetting mechanism.
2. The traditional OVD method of core rod production closes the centerline hole in the core preform by applying a vacuum along the centerline hole during the core rod drawing process. The conventional method can cause core rod losses, due to the formation of voids or bubbles along the centerline during incomplete hole closure. Additionally, the hole closure process may be non-circular, potentially causing issues with fiber properties. The present method does not have these issues.
3. The conventional closure of the core preform centerline hole usually requires the use of hollow silica handles, ground glass joints, vacuum pumps and associated pipework. In the present invention, as there is no hole to collapse, the costs and associated difficulties with hole closure are eliminated.
4. The closure of the centerline hole typically creates a dip in the refractive index profile of the core rod. The methods disclosed herein result in more uniform refractive index profiles, as the dip in the center of the refractive index profile may be eliminated.
5. In one aspect, the glass preform resulting from sequentially performing VAD core deposition, OVD core deposition, OVD cladding deposition steps can be drawn directly into fiber without the additional stages of drawing into rods and further overcladding. This process eliminates a range of processing steps, and reduces manufacturing costs accordingly.

The disclosed methods combine the advantages of making core preforms via VAD in the centerline region with the advantages of OVD in the non-centerline regions. These advantages include high deposition rates, preform stability, large preform size, and high deposition efficiency outside the centerline region of the preform. Also, the porous core preforms are porous, with no centerline hole, allowing the core preforms to be thoroughly chemically dried, with no problem of rewetting within the centerline region of the core preform. Accordingly, the optical waveguide fiber made from the optical waveguide preforms exhibit a much smaller water peak at 1380nm, and exhibit a much lower attenuation in the window around 1380nm, which is typical for VAD core preforms, than optical waveguide fiber manufactured in accordance with the standard OVD methods.

An additional advantage is that the optical waveguide fiber manufactured from optical waveguide preforms of the current invention can operate at any selected wavelength over a range of wavelengths from about 1300nm to about 1680nm without undue optical attenuation.

The present invention provides, inter alia, the subject matter of the following clauses:
1. A method of manufacturing a glass core preform, said method comprising the steps of:
   (a) depositing a silica-based core material on a target of deposition comprising a rotating rod to grow a length of a solid substantially cylindrical soot initial core preform, wherein the initial core soot preform is held at one end by the rod and is free at an opposing end;
   (b) depositing additional silica-based core material on the target via a reciprocating deposition;
   (c) depositing cladding material on the target via a reciprocating deposition to form a final core preform; and
   (d) drying and sintering at least a portion of said final core preform to form a glass core preform.
2. The method of clause 1 wherein said drying and sintering steps are performed under conditions suitable to make an optical fiber having an attenuation of less than about 0.35 dB/km at a wavelength of 1380 nm.
3. The method of clause 1 or clause 2, wherein said drying and sintering steps are preformed under conditions suitable to make an optical fiber having an attenuation of less than about 0.31 dB/km at a wavelength of 1380 nm.
4. The method of clause 1, or any one of clauses 2 to 3, further comprising a step of drawing optical fiber from the glass core preform.
5. The method of clause 1, or any one of clauses 2 to 4, wherein said final core preform is chemically dried in a drying furnace.
6. The method of clause 1, or any one of clauses 2 to 5, further comprising the steps of positioning a handle proximate the opposing end of the initial core preform wherein the handle comprises a portion of the target for the deposition of steps (b) and (c).
7. The method of clause 1, or any one of clauses 2 to 6, further comprising the steps of:
   positioning said glass core preform in a furnace;
   heating said glass core preform within said furnace; and
   drawing said glass core preform into a glass core rod having an outside diameter smaller than the outside diameter of said glass core preform.
8. The method of clause 1, or any one of clauses 2 to 7, wherein steps (a) and (b) are performed under conditions suitable to produce an intermediate core preform having a mass greater than 400 grams.
9. The method of clause 1, or any one of clauses 2 to 8, wherein steps (a) through (d) are performed under conditions suitable to produce a glass core preform having a mass greater than nine kilograms.
10. The method of clause 1, or any one of clauses 2 to 9, wherein the deposition of step (a) is performed using a leading burner and a trailing burner.
11. The method of clause 10 wherein the leading burner and the trailing burner reciprocate relative to the target in performing the deposition of steps (b) and (c).
12. A method of manufacturing a glass core preform, said method comprising the steps of:
   (a) depositing a silica-based material on a target of deposition comprising a rotating rod to grow a length of a substantially cylindrical initial core preform being held at one end by the rod and being free at an opposing end;
   (b) depositing additional material on the target via a reciprocating deposition to form a final core preform; and
   (c) drying and sintering at least a portion of said final core preform to form a glass core preform;
   wherein before completing step (b), a handle is positioned proximate the opposing end and the handle comprises part of the target of deposition for at least part of the deposition of step (b);
   wherein the steps are performed under conditions suitable to make an optical fiber having an attenuation of less than about 0.35 dB/km at a wavelength of 1380 nm.
13. The method of clause 12 wherein said drying and sintering steps are performed under conditions suitable to make an optical fiber having an attenuation of less than about 0.31 dB/km at a wavelength of 1380 nm.
14. The method of clause 12 or clause 13, further comprising a step of drawing optical fiber from the glass core preform.
15. The method of clause 12, or any one of clauses 13 to 14, wherein said final core preform is chemically dried in a drying furnace.
16. The method of clause 12, or any one of clauses 12 to 15, further comprising the steps of:
   positioning said glass core preform in a furnace;
   heating said glass core preform within said furnace; and
   drawing said glass core preform into a glass core rod having an outside diameter smaller than the outside diameter of said glass core preform.
17. The method of clause 12, or any one of clauses 13 to 16, wherein step (a) and (b) are performed under conditions suitable to produce an intermediate core preform having a mass greater than 400 grams.
18. The method of clause 12, or any one of clauses 13 to 17, wherein the steps are performed under conditions suitable to produce a glass core preform having a mass greater than nine kilograms.
19. The method of clause 12, or any one of clauses 13 to 18, wherein the deposition of step (a) is performed using a leading burner and a trailing burner.
20. The method of clause 12, or any one of clauses 13 to 19, wherein the leading burner and the trailing burner reciprocate relative to the target in performing deposition of the steps (b) and (c).

### BRIEF DESCRIPTION OF DRAWINGS

Having thus described the invention in general terms, reference will now be made to the accompanying drawings, which are not necessarily drawn to scale, and wherein:
FIG. 1 shows a schematic illustration of one embodiment of a deposition system for manufacturing porous core preforms suitable for manufacturing low water peak optical fiber; and
FIG. 2 illustrates a flow chart depicting one embodiment of a preferred method of manufacturing optical fiber using the deposition system of FIG. 1.

### DETAILED DESCRIPTION OF PREFERRED EMBODIMENTS

Telecommunications systems traditionally have avoided using the water peak region, partly due to the lack of optical waveguide fiber with low water peaks. Fiber manufacturers now produce low water peak fibers by various methods. The development of methods for producing low water peak fibers has coincided with the development of telecommunication systems that increasingly use all the wavelengths between about 1300 nm and 1650 nm. For telecommunication systems to fully utilize this wavelength range, removal of the water peak from the optical waveguide fiber is required.

There are three main methods of optical waveguide preform manufacture in common use. The three techniques have similar methods of vapor generation and oxidation, but differ in the geometry of the substrate on which the oxide soot is deposited:

### (i) Deposition in Tube Methods

These methods comprise techniques known as MCVD (Modified Chemical Vapor Deposition) and PCVD (Plasma Chemical Vapor Deposition). In these techniques, a vapor stream is introduced to the end of a high-purity quartz tube, and the oxides are deposited on the inner surface of the tube.

### (ii) VAD (Vapor Axial Deposition)

In this technique, the deposition takes place on a usually vertically mounted rotating mandrel, and the preform is "grown" axially from a short stub into a longer, cylindrical preform. Methods for manufacturing a preform using a rotating mandrel and growing a preform axially are described in U.S. Patent No. 5,583,693, issued to Sarkar, which is incorporated by reference as though fully set forth herein.

### (iii) OVD (Outside Vapor Deposition)

In this technique, silica-based soot is deposited on a rotating target rod. The rod builds up to form a cylindrical soot preform, which can be sintered and dried to form a glass preform. For example, U.S. Patent No. 6,477,305, which is incorporated by reference as though fully set for the herein, discloses a method of eliminating the water content in the doped core portion of preforms caused by preforms' centerline hole following removal of the target rod.

The methods and embodiments of the present invention are particularly applicable to optical waveguide preforms manufactured using the VAD process.

The VAD process, while offering a low water peak solution for manufacturing optical waveguide fiber, is limited in its utility because of the size of the core preforms it can produce. The doped core portions of such preforms are limited in size to what can be deposited in one pass of a deposition. The VAD core preform sizes are also limited by the weight that the deposited soot can support before breaking. Modern preforms need to be large to keep down the cost per kilometer of fiber. Core preforms are sought having a minimum central core doped mass of 800 grams so that an at least a 10 kilogram core preform can be manufactured. Using the VAD method, the core preform would break long before it is completed, where such preform has an approximately 800 gram doped central core.

Moreover, VAD deposition rates are relatively very low. One reason for this is that the targets are never large enough to capture large amounts of soot. Another reason for the slow deposition rates in VAD is the relatively low thermophoretic force between the soot and the developing preform. The slow translational speed of the deposition in VAD results in a lower thermophoretic force, and as a result, a lower deposition efficiency. The slow speed also results in more tapered preforms that have large unusable portions as discussed in U.S. Patent No. 6,789,401. In VAD, increasing the translational speed of the deposition to eliminate these problems typically breaks soot preform because of the accelerating and decelerating forces that accompany higher speeds. A need therefore exists to generate large preforms with a low water peak that overcomes these issues.

Commercial OVD core manufacturing equipment and processes are available that simultaneously manufacture two 11 kilogram core preforms having an 800 gram central core doped mass at deposition rates of around 12 grams per minute per preform. Such an OVD machine and process produces sufficient core preforms to make the cores for five million kilometers of fiber per year. Producing VAD cores at rates similar to OVD core production is also needed. The systems and methods disclosed herein solves the aforementioned problems.

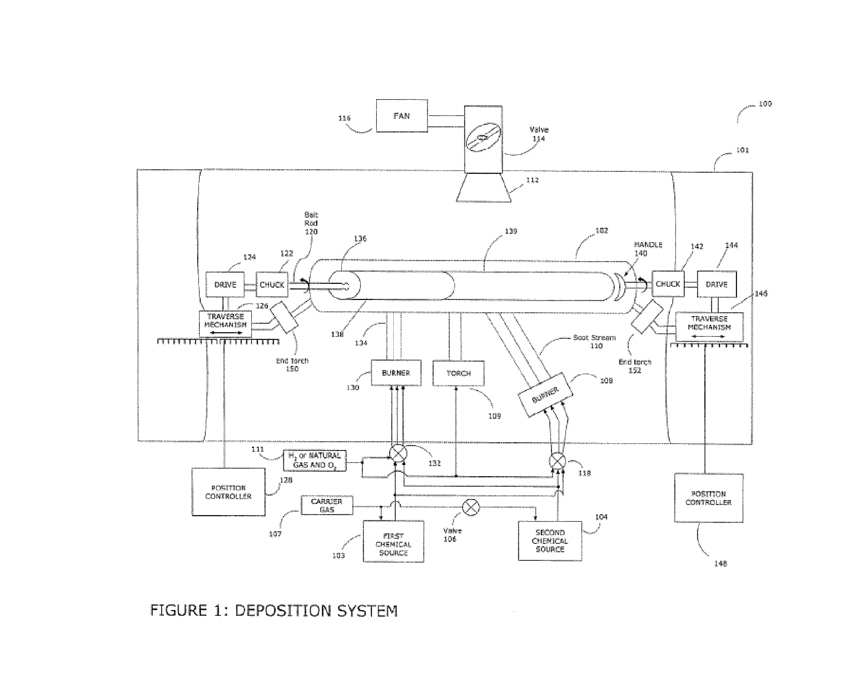

FIG. 1 depicts a preferred embodiment of a deposition system 100 for producing a porous core preform 102 that combines both the VAD and OVD processes. In so doing, both the VAD and OVD processes are conducted in a deposition chamber 101 as depicted in FIG. 1. FIG. 1 does not depict all of the components necessary for performing the processes described herein. Rather, FIG. 1 is provided to be illustrative of basic elements of a deposition system for performing the methods disclosed herein. For example, depositions systems as are known in the art possess numerous valves for controlling the delivery of gases and chemicals. For the sake of simplicity and clarity in communicating the systems and methods disclosed herein, such valves are not shown in FIG. 1. Moreover, any valve that is depicted may represent multiple valves in an actual deposition system. They also may be designed located other than as they are depicted. The illustrative nature of FIG. 1 applies to other depicted elements of FIG. 1 as well.

A first chemical source 103, such as a vaporizer, contains SiO₂ (silicon dioxide) precursor materials, such as SiCl₄ (silicon tetrachloride). A second chemical source 104 is provided, such as a vaporizer containing precursor dopant materials, such as GeCl₄ (germanium tetrachloride). SiCl₄ and GeCl₄ vapors exit the SiCl₄ source and GeCl₄ source 103, 104, typically. In an optional embodiment, the precursor SiO₂ material may be OMCTS (octamethylcyclotetrasiloxane). The system 100 includes a gas carrier line 107 that is configured to provide fuel, such as H₂ or natural gas and O₂, from a source 111. Valve 106 may be opened or closed to allow or shut off the GeCl₄ source 104 when desired, such as when cladding deposition proceeds. The glass forming compounds are mixed and dissociated, as is well known in the art, upon being provided to a first burner 108. In FIG. 1, burner 108 is in a fixed position relative to the deposition zone. Burner 108 generates a streamlined soot stream 110 that may be directed upwardly and at an angle of inclination, such as 65°, relative to the longitudinal axis of the preform. Burner 108 may also be positioned perpendicular to the horizontal axis of rotation. Preferably, burner 108 is perpendicularly positioned relative to the horizontal axis at least during the OVD portion of the deposition to increase the amount of soot that is deposited. An exhaust outtake 112 above the target area collects gases and particulates that are not deposited on the target. A valve 114, such as a butterfly valve, preferably is positioned in an exhaust path between the exhaust outtake 112 and a fan 116 and is preferably used to control the flow rate of the exhaust. Valve 118 can be turned on or off to control the usage of burner 108.

Silica bait rod 120 is positioned along the reference axis on chuck 122. The chuck 122 and bait rod 120 are rotated by a rotary drive 124 mounted on a linear traverse mechanism 126. A position controller 128 runs traverse mechanism 126 at a desired rate.

A second burner 130 is fed deposition material using the first chemical (e.g., SiCl₄) source 103 when valve 132 is open. Burner 130 optionally receives material from the second chemical source (e.g., GeCl₄) when the valve 106 is also open. A second soot stream 134 is generated that is preferably aimed substantially perpendicular to the longitudinal axis of the preform. A torch 109, which is also provided with fuel such as H₂ or natural gas and O₂ from the source 111, is also preferably positioned between the burners 108, 130 to help control the density of the deposition. Throughout the deposition process, torch 109 preferably maintains a fixed lateral position relative to the burners 108 and 130. Additional torches may be added to support this purpose at different locations along the length and/or radial position of the developing substantially cylindrical preform.

Formation of a core preform using VAD approaches as are well know in the art may be performed using deposition chamber 101. Examples of suitable VAD approaches are disclosed in U.S. Patent 5,558,693 issued to Sarkar. A starter tip 136 develops over the free end of the bait rod 120. When sufficient material has been deposited, the tip 136 forms an adequate base for the manufacture of a solid soot core cylinder 138.

Handle 140 is preferably positioned along the reference axis on chuck 142, to be in proximity or alternatively in contact with the free end of the solid soot core cylinder 139 once the cylinder 139 achieves a predetermined length. Solid soot core cylinder 139 is essentially solid soot core cylinder 138 after it has achieved the desired length. Handle 140 is preferably concave and matched to the convex curvature of the free end of the grown initial core preform 139. Because of the potential for air gaps between the handle 140 and the preform 139, handle 140 preferably includes a hole through the ends of handle 140. The handle 140 and second chuck 142 are rotated by a second rotary drive 144 synchronized to the rotation of drive 124. Rotary drive 144 is optionally mounted on linear traverse mechanism 146 that is run by position controller 128 or a second position controller 148 synchronized with position controller 128, as needed.

End torches 150 and 152 are also preferably provided in the deposition chamber 101. The end torches 150, 152 are preferably connected to the respective traverse mechanisms 126, 146. The end torches 150, 152 also receive fuel from the fuel (e.g., H₂ or natural gas and O₂) source 111. The end-torches 150, 152 are preferably active during the deposition process to keep the ends of the preform hot. Doing so prevents the preform from cracking, a phenomenon that typically starts at the ends of the preform where thermal expansion and density coefficient mismatches are most severe.

A solid cylindrical glass optical waveguide preform 102 from which optical waveguide fiber is manufactured comprises a central core region comprising silica material, such as for example, glass SiO₂, combined with a dopant (preferably GeO₂ (germanium dioxide)), surrounded by a cladding region comprising silica material, such as for example, glass SiO₂. The core region preferably extends longitudinally along the central axis of the cylindrical optical waveguide preform.

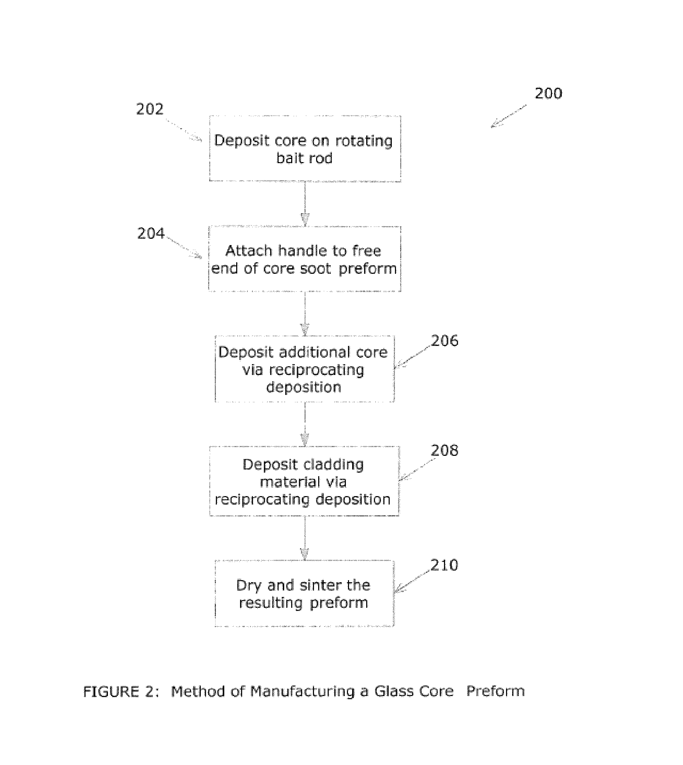

FIG. 2 is a flow diagram depicting a preferred embodiment of a method 200 for manufacturing a glass core preform, for which the deposition system of FIG. 1 may be used. In a first step 202, core soot from precursor materials, preferably in the form of SiCl₄ combined with GeCl₄, is deposited by a burner onto a target comprising a rotating bait rod, such as bait rod 120 of FIG. 1 to form a porous core body or an initial core preform 138. "Target" refers to the intended recipient of soot material within the deposition chamber 101. For example, with reference to FIG. 1, the target is initially the bait rod 120. After deposition on the bait rod, the target is the starter tip 136. Later, the target is the cylindrical core preform 138. In subsequent radial depositions, the target includes the full length soot preform 139, the bait rod 120, and the handle 140 attached to the free end of the preform 139. Preferably a second burner, such as burner 130 depicted in FIG. 1, is also depositing soot in a trailing deposition that preferably constitutes a single pass over the initial soot core preform that grows in length due to the deposition by the first burner.

In one embodiment, the porous core body is formed by chemically reacting at least some of the constituents of a moving fluid mixture comprising at least one glass-forming precursor compound in an oxidizing medium. The reaction results in the formation of a silica-based reaction product (soot) which can be doped or undoped. At least a portion of this reaction product is directed toward a bait rod, to grow the porous body. The porous body may be formed, for example, by depositing silica-based reaction product on the free end of the axially growing preform, such as via a VAD process as is known in the art.

In so doing, an initial core preform is grown from the bait rod. Using the deposition system of Figure 1, the initial core soot preform is grown horizontally or vertically. The core soot preform is preferably grown in this manner until it reaches a certain predetermined length, preferably about 1 meter. To achieve this length, the deposition is performed to grow the preform with a minimum soot density to avoid breakage, sometimes greater than 0.3 g/cm³. Preferably, the mass of the initial core preform at this stage is approximately 100 grams.

Once the predetermined core soot preform length is achieved, in a next step 204, a handle is preferably positioned proximate to the free end of the preform so as to bear any stresses that may cause the preform to break. The handle, preferably matched to the curvature of the end of the axially grown preform, preferably rotates at the same speed and direction as the core soot preform and remains consistently proximate to the free end of the preform.

In a next step 206, additional core material is deposited on the target. The deposition, however, rather than the axial deposition performed in the previous step by the burner 108, is radial, using one or more burners that are preferably depositing on a reciprocating target consistent with OVD techniques that are well know in the art. Employing, for example, the deposition system of FIG. 1, the burners 108 and 130 are preferably oriented perpendicularly to the horizontal axis of deposition. In this example, both burners 108, 130 are used to preferably perform a reciprocating deposition of core soot material, in a manner consistent with OVD processes as are well known in the art.

While a two-burner configuration as depicted in Figure 1 may be employed for the OVD process of this step 206 and the next step 208, it is appreciated that other burner configurations may be employed. Such configurations include configurations where the number of burners employed at once is three, four, five or more, such as is described in U.S. Patent No. 5,116,400, which is incorporated by reference as though fully set forth herein. In these multiple burner configurations, the reciprocating deposition of the OVD process is performed. With a large number of burners, however, the reciprocating deposition is more specifically described as a dithering deposition process where each burner travels a relatively small distance relative to the length of the preform.

Preferably, the target for the reciprocating deposition includes the core preform 102 and 138, the handle 140 and the bait rod 120. Depositing on the handle and bait rod allows for the handle and bait rod to support the weight of the preform as its mass increases. The attachment of and deposition on handles in the manufacture of low water-peak optical fiber preforms is described in U.S. Patent No. 7,930,905, which is incorporated by reference as though fully set forth herein.

One advantage of employing the OVD process at this stage is that the OVD process provides for deposition of layers that are longitudinal with respect to the preform as opposed radial, which is what is produced by the VAD deposition method employed in step 202. The longitudinal deposition layering provides for a stronger preform that is more resistant to breaking as the mass of the preform increases with further deposition of soot. This may be particularly significant where the OVD process is being performed horizontally, where gravity may tend cause cracks or breaks of the preform as its mass increases with the weight of the preform being born by the handles.

Employing a handle, however, is also advantageous where the OVD process is performed vertically. Including a handle on the free lower end of the core preform before the OVD process commences makes the preform more stable, and allows the preform to handle the stresses of a high-speed OVD process and to avoid breakages in the developing preform. Methods and advantages of performing OVD with high-speed passes are well-known in the art, such as are described in U.S. Patent No. 6,789,401.

In the OVD process, the bait rod is preferably mounted on a lathe, which is designed to translate and rotate the bait rod, in close proximity to a soot-producing burner, such as burner 130 of Figure 1. As the core soot preform is rotated and translated, the soot is directed toward the core soot preform. At least a portion of the soot is deposited on the bait rod and handle to form the porous core preform.

Once the doped core soot preform has achieved a predetermined mass, such as at least about 400 grams, and preferably about 800 grams, the next step 208 is performed, in which cladding material, preferably in the precursor form of SiC1₄ or OMCTS, is deposited on the target. Again, the target of the deposition preferably includes the preform and the handle and bait rod at respective ends of the preform. Again this phase of the deposition is performed via reciprocating preform or burners, such as burners 108 and 130 of Figure 1, operating consistent with known OVD techniques. Deposition of cladding material continues until the preform's mass exceeds about five kilograms and is preferably about 11 kilograms.

Once the targeted quantity of soot has been deposited, the soot deposition preferably is terminated. In a next step 210, the core soot preform is dried and sintered using techniques as are known in the art to consolidate the soot material. Preferably, the porous core preform is positioned and rotated in a furnace for heat treatment. The porous core body is preferably subjected to a temperature of about 1100 to 1250°C while still retaining its porosity. During this heat treatment process, the porous core preform is preferably chemically dried by exposing the body to a chlorine-containing atmosphere, which effectively removes water and other impurities from the preform. The soot preform is then sintered to glass at a temperature about 1500°C in a helium atmosphere that may contain some chlorine to avoid rewetting. The result of this process is a glass core preform, having a density preferably of about 2.2 g/cm³, which through yet additional processing may be drawn into optical fiber for telecommunications applications.

In accordance with one preferred embodiment, the porous core preform is positioned within a sintering furnace and rotated, where the preform is chemically dried at a temperature of preferably about 1100°C in an atmosphere of chlorine and helium. Following drying, the porous core preform preferably is driven down into the hot zone of the sintering furnace preferably in an inert gas atmosphere, such as helium, and then sintered at an elevated temperature, preferably at about 1500°C, to thereby form a glass core preform.

In one embodiment, the glass core preform is taken to a core rod drawing furnace, where the preform is drawn into a number of reduced diameter core rods. As the glass core preform is solid glass, without a centerline hole, there is no need for the application of vacuum to the preform during core rod drawing, as there is no possibility of the centerline region being rewet by exposure to the ambient atmosphere and there is no need to close a hole. Deposition by the OVD method continues on the glass core rods or the original glass core preforms to produce glass optical waveguide preforms, which are then drawn to optical waveguide fiber.

In another embodiment, after deposition has been terminated, the dimensions of the core region and the cladding region are such that the dried and sintered preform is a glass optical waveguide preform. This glass optical waveguide preform may be directly drawn to optical waveguide fiber. The resulting optical waveguide fiber produced by this method has an attenuation of no greater than 0.35 dB/km for light at a measured wavelength 1380 nm, and preferably less than 0.31 dB/km.

Numerous references describe the manufacture of preforms by overcladding core rods by OVD soot deposition, such as described in U.S. Patent No. 7,930,905, or by performing rod-in-cylinder processes, such as described in U.S. Patent No. 6,131,415.

The foregoing detailed description of our invention and of preferred embodiments as to products, compositions, and processes is illustrative of specific embodiments only. It is to be understood, however, that additional embodiments described herein, together with those additional embodiments, are considered to be within the scope of the present invention. All preferred/ optional features as described herein are, unless stated otherwise or unless it would be contradictory or impossible, applicable to all aspects of the invention and may be used in all possible combinations and permutations.

## Claims

1. A method of manufacturing a glass core preform, said method comprising the steps of:
(a) depositing a silica-based core material on a target of deposition comprising a rotating rod to grow a length of a solid substantially cylindrical soot initial core preform, wherein the initial core soot preform is held at one end by the rod and is free at an opposing end;
(b) depositing additional silica-based core material on the target via a reciprocating deposition;
(c) depositing cladding material on the target via a reciprocating deposition to form a final core preform; and
(d) drying and sintering at least a portion of said final core preform to form a glass core preform.

2. A method of manufacturing a glass core preform, said method comprising the steps of:
(a) depositing a silica-based material on a target of deposition comprising a rotating rod to grow a length of a substantially cylindrical initial core preform being held at one end by the rod and being free at an opposing end;
(b) depositing additional material on the target via a reciprocating deposition to form a final core preform; and
(c) drying and sintering at least a portion of said final core preform to form a glass core preform;
wherein before completing step (b), a handle is positioned proximate the opposing end and the handle comprises part of the target of deposition for at least part of the deposition of step (b);
wherein the steps are performed under conditions suitable to make an optical fiber having an attenuation of less than about 0.35 dB/km at a wavelength of 1380 nm.

3. The method of claim 1 or claim 2, wherein said drying and sintering steps are performed under conditions suitable to make an optical fiber having an attenuation of less than about 0.35 dB/km at a wavelength of 1380 nm.

4. The method of claim 3, wherein said drying and sintering steps are performed under conditions suitable to make an optical fiber having an attenuation of less than about 0.31 dB/km at a wavelength of 1380 nm.

5. The method of any one of claims 1 to 4 wherein the method further comprises a step of drawing optical fiber from the glass core preform.

6. The method of any one of claims 1 to 5 wherein said final core preform is chemically dried in a drying furnace.

7. The method of any one of claims 1 to 6, the method further comprising the steps of:
positioning said glass core preform in a furnace;
heating said glass core preform within said furnace; and
drawing said glass core preform into a glass core rod having an outside diameter smaller than the outside diameter of said glass core preform.

8. The method of any one of claims 1 to 7, wherein steps (a) and (b) are performed under conditions suitable to produce an intermediate core preform having a mass greater than 400 grams.

9. The method of any one of claims 1 to 8, wherein the method steps are performed under conditions suitable to produce a glass core preform having a mass greater than nine kilograms.

10. The method of any one of claims 1 to 9, wherein the deposition of step (a) is performed using a leading burner and a trailing burner.

11. The method of claim 10 wherein the leading burner and the trailing burner reciprocate relative to the target in performing the deposition of steps (b) and (c).

12. The method of claim 1, or any one of claims 3 to 11 as dependent on claim 1, wherein the method further comprises the steps of positioning a handle proximate the opposing end of the initial core preform, wherein the handle comprises a portion of the target for the deposition of steps (b) and (c).
